# EUROPÄISCHE PATENTANMELDUNG

(11) **EP 2 088 384 A2**
(43) Veröffentlichungstag der Anmeldung: **12.08.2009**
(21) Anmeldenummer: 09001479.6
(22) Anmeldetag: 04.02.2009
(51) Int. Cl.: F24J 2/38

(54) **Solarkraftwerk mit sensorgestützter Justagemöglichkeit**

(30) Priorität: 09.02.2008 DE 102008008402
(71) Anmelder: Robert Bosch GmbH, 70469 Stuttgart (DE)
(72) Erfinder: Schemm, Eberhard, 97816 Lohr am Main (DE); Schueren, Volker, 97828 Marktheidenfeld (DE)
(74) Vertreter: Thürer, Andreas

(57) **Zusammenfassung**

Eine Anlage zur Umwandlung von Sonnenlicht in eine andere Energieform mit einer Wandlereinrichtung, welche auf sie eintreffende Strahlung absorbiert, einer Vielzahl von Spiegelelementen (6a, 6b, 6c) welche beabstandet zu der Wandlereinrichtung (2) angeordnet sind, um auf sie eingestrahltes Sonnenlicht auf die Wandlereinrichtung (2) umzulenken, wobei die einzelnen Spiegelelemente (6a, 6b, 6c) jeweils um wenigstens eine Achse schwenkbar sind und die Anlage wenigstens einen Lichtsensor (10) aufweist, der auf Licht reagiert, das von den Spiegelelementen (6a, 6b, 6c) reflektiert wird. Der Lichtsensor (10) ist mit Laserpointern ausgestattet, mit deren Hilfe er gegenüber den Spiegelelementen (6a, 6b, 6c) und der Wandlereinrichtung (2) ausgerichtet werden kann

## Beschreibung

Die vorliegende Erfindung bezieht sich auf eine Anlage zur Umwandlung von Sonnenlicht in eine andere Energieform. Die Erfindung wird unter Bezugnahme auf ein Solarkraftwerk beschrieben, welches Sonnenlicht in Wärmeenergie umwandelt. Es wird jedoch darauf hingewiesen, dass die Erfindung auch bei anderen Arten von Solarkraftwerken beispielsweise bei Solarkraftwerken mit Photovoltaik - Zellen und dergleichen Anwendung finden kann.

Aus dem Stand der Technik sind derartige Solarkraftwerke seit langem bekannt. Genauer gesagt sind Solarkraftwerke bekannt, welche einen Parabolrinnenkollektor aufweisen, der dazu dient, das Sonnenlicht auf einen Brennpunkt der Parabolrinne zu richten. Daneben sind aus dem Stand der Technik auch Kollektoren und insbesondere Fresnelkollektoren bekannt, die eine Vielzahl von separaten planen oder nur leicht gekrümmten Spiegelstreifen aufweisen, die um ihre Langsachse gedreht werden können. Dabei ist es möglich, jeden dieser Spiegelstreifen stets individuell auf ein Absorberrohr zu fokussieren. In Abhängigkeit vom Sonnenstand kann der benötigte Neigungswinkel jedes dieser Spiegelstreifen exakt bestimmt werden.

Aus der DE 27 42 014 C2 ist ein Sonnenkollektor mit Sonnenfolgemitteln bekannt. Dabei ist eine Vielzahl von Kollektoren vorgesehen, die schwenkbar um ihre Längsachse angeordnet sind. An diesen Reflektoren sind jeweils Achsen mit Stangen angeordnet, so dass die einzelnen Reflektoren gemeinsam und untereinander gekoppelt geschwenkt werden können.

Die EP 1 754 942 A1 beschreibt eine Fresnelsolarkollektoranordnung. Auch hier ist eine Vielzahl von Primärspiegeln vorgesehen, wobei eine Bewegung dieser einzelnen Spiegel mechanisch gekoppelt ist und eine gemeinsame Bewegung dieser Spiegel mittels einer Schubstange erfolgt. In der Praxis wird jedoch der optimale Winkel, d. h. derjenige Winkel, aufgrund dessen die reflektierten Winkel ideal auf einen Absorber einstrahlen, nie genau erreicht werden können, weil Messungenauigkeiten bezüglich dieses Winkels am Spiegel, Verschleiß, thermisch bedingte Verformungen, Verlagerungen der Spiegel durch Winddruck, Fertigungs- und Montageungenauigkeiten, Fundamentabsenkung und vieles mehr dies behindert. Auch durch einen im Stand der Technik über ein Absorberrohr angebrachte Sekundärspiegel, der Streulicht zu dem Absorberrohr zurücklenkt wird das Problem nur ungenügend gelöst.

Aus der DE19630201C1 ist ein Solarkraftwerk bekannt, bei dem viele Spiegel das Sonnenlicht auf einen zentralen Absorber konzentrieren. Diese Heliostaten sind mit je einem eigenen Sensor versehen, der das ausfallende Licht in Richtung Absorber erfasst. Problematisch bleibt hier jedoch die Ausrichtung des Sensors.

Der vorliegenden Erfindung liegt daher die Aufgabe zugrunde, eine Anordnung und ein Verfahren zur Verfügung zu stellen, das es erlaubt, trotz der aufgeführten Störeinflüsse die Spiegelstreifen so auszurichten, dass das Licht genau auf eine Absorbereinrichtung fällt. Daneben soll der Energieeintrag der Anlage erhöht werden, wobei dies insbesondere durch eine stets optimale Ausrichtung der Spiegelelemente erfolgen soll. Damit soll eine Optimierung des Wirkungsgrads des Solarkraftwerks bzw. eine maximale Ausnutzung der eingestrahlten Sonnenenergie bei einfacher Montage und Wartbarkeit erreicht werden.

Als problematisch hat sich die Ausrichtung bzw. Justage der Sensoreinrichtungen gezeigt. Eine weitere Aufgabe besteht damit darin, die Justagemöglichkeiten für die Sensoreinrichtungen auch für nicht geschultes Personal zu verbessern. Daneben soll auch die Möglichkeiten einer Nachjustage verbessert werden.

Dies wird erfindungsgemäß durch eine Anlage gemäß Anspruch 1 sowie eine Sensoreinrichtung nach Anspruch 13 und ein Verfahren nach Anspruch 15 erreicht. Vorteilhafte Ausführungsformen und Weiterbildungen sind Gegenstand der Unteransprüche.

Eine erfindungsgemäße Anlage zur Umwandlung von Sonnenlicht in eine andere Energieform weist eine Wandeleinrichtung auf, welche auf sie eintreffende Strahlung absorbiert. Weiterhin ist eine Vielzahl von Spiegelelementen vorgesehen, welche beabstandet zu der Wandeleinrichtung angeordnet sind, um in einem Arbeitszustand auf sie eingestrahltes Sonnenlicht auf die Wandlereinrichtung umzulenken wobei die einzelnen Spiegelelemente jeweils um wenigstens eine Achse wenigstens teilweise unabhängig voneinander schwenkbar sind und die Anlage wenigstens eine Sensoreinrichtung aufweist, welche ein für eine auf sie eingestrahlte Sonneneinstrahlung charakteristisches Signal ausgibt. Die Sensoreinrichtung ist dabei bevorzugt in einem vorbestimmten Abstand bezüglich der Wandlereinrichtung angeordnet und reagiert auf Licht, das von den Spiegelelementen in Richtung der Sensoreinrichtung reflektiert wird.

Erfindungsgemäß weist die Sensoreinrichtung wenigstens eine Strahlungseinrichtung zur Positionierung der Sensoreinrichtung gegenüber der Anlage auf. Mit Hilfe dieser Strahlungseinrichtung kann die Sensoreinrichtung in einer gewünschten Weise und insbesondere optimal gegenüber der Anlage positioniert werden. Vorzugsweise kann die Sensoreinrichtung durch Verwendung der Strahlungseinrichtung ohne weitere (Justage-)hilfsmittel positioniert werden.

Unter einem für die eingestrahlte Sonneneinstrahlung charakteristischen Signal wird insbesondere ein Signal verstanden, welches für die Intensität der auftreffenden Strahlung charakteristisch ist. Vorzugsweise ist die Sensoreinrichtung in einem vorbestimmten Abstand bezüglich der Wandlereinrichtung angeordnet um zu verhindern, dass beispielsweise durch Schattenwürfe der Sensoreinrichtung ein größerer Oberflächenbereich der Wandlereinrichtung verdeckt wird. Durch die an der Sensoreinrichtung angeordnete Strahlungseinrichtung ist es möglich, die Sensoreinrichtung gegenüber der Anlage zu positionieren und damit beispielsweise an einer genau vorbestimmten Position anzuordnen.

Vorzugsweise ist die Sensoreinrichtung zwischen einem Spiegelelement und der Wandlereinrichtung vorgesehen. Genauer gesagt kann das von der Strahlungseinrichtung ausgegebene Licht auf einen Referenzpunkt gerichtet werden und an Hand dieses Referenzpunktes die Ausrichtung der Sensoreinrichtung vorgenommen werden. Bevorzugt handelt es sich bei dem hier vorgeschlagenen Solarkraftwerk um ein Solarthermiekraftwerk mit sogenannten Fresnelspiegeln.

Im Unterschied zu einem Parabolinnenkollektor besteht hier das Spiegelelement bei einem Fresnelkollektor aus separaten planen oder leicht gekrümmten Spiegelstreifen, die um ihre Längsachse gedreht werden können und jeder dieser Spiegelstreifen wird hier bevorzugt individuell auf die Wandlereinrichtung, die beispielsweise als Absorberrohr ausgeführt sein kann, gerichtet. In der Summe findet also eine Linienfokussierung statt. Der benötigte Neigungswinkel jedes Spiegelstreifens ist vom Sonnenstand abhängig.

Da der Lichtstrahl auf Bruchteile eines Grads z. B. 0,005° genau eingestellt werden muss, damit das gesamte Sonnenlicht auf die Wandeleinrichtung auftrifft, ist die mechanische Justage der Lichtsensoren kompliziert.

Die genaueste Methode, jedes Spiegelelement auf das Absorberrohr auszurichten, besteht darin, die Richtung des reflektierten Lichts im Betrieb zu messen und dem Spiegelwinkel in Abhängigkeit der gemessenen Lichtrichtung im geschlossenen Regelkreis zu korrigieren.

Bevorzugt wird daher jedem Spiegelelement eine eigene, bevorzugt fest montierter, Lichtsensoreinrichtung zugeordnet und diese Sensoreinrichtung befindet sich in der Ebene, die zwischen der Wandlereinrichtung und der Spiegelmittelachse aufgespannt wird und zwar bevorzugt möglichst nahe an dem Spiegelelement. Bevorzugt befindet sich die Sensoreinrichtung entlang des Abstands zwischen dem Spiegelelement und der Wandlereinrichtung in der in Richtung des Spiegelelements gewandten Hälfte der Strecke, bevorzugt im ersten Drittel dieser Strecke besonders bevorzugt im ersten Viertel dieser Strecke.

Das von dem Spiegelelement reflektierte Licht muss parallel zur dieser Ebene auf die Wandlereinrichtung gerichtet sein. Die Sensoreinrichtung misst nun die Abweichung der Lichtrichtung im Bezug auf die Ebene. Zu diesem Zweck ist es vorteilhaft, wenn die Sensoreinrichtung selbst hochgenau in dieser Ebene liegt.

Vorzugsweise weist die Strahlungseinrichtung eine Laserlichtquelle auf. Eine Laserlichtquelle erlaubt die Erzeugung eines sehr genauen Laserpunkts und damit ist Laserlicht besonders vorteilhaft zur Justage geeignet. Besonders vorteilhaft weist die Laserlichtquelle Licht in einem sichtbaren Wellenlängenbereich auf, sodass Referenzpunkte ohne Hinzunahme von Hilfsmittel erkannt werden können.

In einer weiteren vorteilhaften Ausführungsform weist die Sensoreinrichtung wenigstens zwei und bevorzugt wenigstens drei Strahlungseinrichtungen auf, welche Licht in unterschiedliche Richtungen aussenden. Um die oben erwähnte hochgenaue Ausrichtung vor Ort zu ermöglichen, weist der erfindungsgemäße Lichtsensor vorzugsweise drei Laserpointer auf, die für die Montage eingeschaltet werden können. Die Sensoreinrichtung ist korrekt justiert, wenn zwei dieser Laserpointer mitten auf die Wandlereinrichtung bzw. das Absorberrohr weisen und der dritte gleichzeitig auf die Mittellinie des Spiegelelements zeigt. Diese drei Laserpointer in der Sensoreinrichtung sind werkseitig entsprechend vorjustiert.

Auf diese Weise ist die Justage der Sensoreinrichtung unabhängig von Sonne, Wolken und Tageszeit jederzeit problemlos möglich. Die Laserpointer erleichtern die Erstinstallation und die Wartung.

Durch die erfindungsgemäße Vorrichtung wird erreicht, dass die Positionierung der Spiegelelemente stets so genau ist, wie es der Position der Sensoreinrichtung entspricht. Alle anderen Systemfehler werden hier ausgeregelt.

Vorzugsweise ist die Sensoreinrichtung in einer Ebene angeordnet, welche durch eine Längsrichtung des Spiegelelements und durch eine Längsrichtung der Wandlereinrichtung gebildet wird. In diesem Falle ist bevorzugt die Wandlereinrichtung als Absorberrohr ausgeführt und zwischen dieser entsprechenden Längsrichtung und der Mittelachse des Spiegelelements wird die genannte Ebene gebildet.

Bei einer weitern vorteilhaften Ausführungsform weist die Anlage eine Vielzahl von motorischen Antriebseinrichtungen auf, welche die Schwenkbewegungen der Spiegelelemente bewirken. Weiterhin ist vorzugsweise wenigstens ein Spiegelelement um zwei Achsen schwenkbar. Auf diese Weise kann eine genauere Justierung der Spiegelelemente erreicht werden.

Bei einer weiteren vorteilhaften Ausführungsform weist die Anlage eine Vielzahl von Sensoreinrichtungen auf, wobei bevorzugt jedem Spiegelelement eine Sensoreinrichtung zugeordnet wird.

Wie oben ausgeführt, ist bevorzugt die Wandlereinrichtung als Absorberrohr ausgebildet. Es wäre jedoch auch möglich, die Anlage als sogenanntes Turmkraftwerk zu konzipieren. In diesem Falle reflektieren die einzelnen Spiegelelemente das Sonnenlicht im Prinzip auf einen zentralen Punkt. Die Spiegelelemente werden hier zweiachsig nachgeführt. Die Erfindung ist auch in diesem Falle einsetzbar. Bei dieser Ausführungsform sitzt die Sensoreinrichtung auf der Verbindungslinie zwischen der Wandlereinrichtung und der jeweiligen Spiegelmitte. Dabei misst die Sensoreinrichtung die Abweichung der Lichtrichtung von dieser Geraden. In diesem Falle weist vorteilhaft die Sensoreinrichtung zwei Strahlungseinrichtungen auf, von denen eine auf die Mitte der Wandlereinrichtung und eine andere auf die Mitte des Spiegelelements ausgerichtet wird.

Bei einer weiteren vorteilhaften Ausführungsform weist die Anlage eine Trägereinrichtung auf, an der die einzelnen Sensoreinrichtungen angeordnet sind. Dabei kann es sich beispielsweise um eine Befestigungsschiene handeln, an der die jeweiligen Sensoreinrichtungen befestigt werden.

Bei einer weiteren bevorzugten Ausführungsform weist wenigstens ein Spiegelelement ein Markierungselement auf, auf dem die von der Strahlungseinrichtung der Sensoreinrichtung abgegebene Strahlung sichtbar ist. Diese Markierung ist vorzugsweise als Linie ausgestaltet, die sich in Richtung einer Mittelachse des jeweiligen Spiegelelements erstreckt.

Bei einer weiteren vorteilhaften Ausführungsform weist die Sensoreinrichtung eine Prozessoreinrichtung auf, welche Intensitätsverläufe des auf sie eintreffenden Lichts auswertet. Durch diese Vorgehensweise ist es möglich, die Sensoreinrichtung auch dazu zu benutzen, um Fehler in der Anlage zu erkennen und zu lokalisieren. So ist es insbesondere möglich, beispielsweise eine Abschattung durch Wolken oder das Absorberrohr zu erkennen und entsprechend zu melden. Weiterhin ist es auf diese Weise möglich, dass ein Lichtsensor sich selbst auf Fehlfunktion und Verschmutzung überwacht. Falls beispielsweise zeitunabhängig die Lichtintensitätswerte, die von dem Sensor angezeigt werden sinken, lässt dies auf eine Verschmutzung schließen. Falls in einem anderen Fall zeitweise die auftreffende Intensität abfällt, weist dies beispielsweise auf eine Abschattung durch das Absorberrohr hin.

Insbesondere durch die erfindungsgemäße Vorgehensweise ist es möglich, dass auch nicht geschultes Personal die Sensoreinrichtungen jederzeit problemlos mechanisch justiert bzw. nachjustiert. Damit gewährleistet die erfindungsgemäße Sensoreinrichtung den optimalen Wirkungsgrad von Fresnel-Solarkraftwerken wobei dies von ungeschultem Personal gehandhabt werden können.

Die vorliegende Erfindung ist weiterhin auf eine Sensoreinrichtung für eine Anlage zur Umwandlung von Sonnenlicht in eine andere Energieform gerichtet welche ein für eine auf sie eingestrahlte Sonneneinstrahlung charakteristisches Warnsignal ausgibt. Erfindungsgemäß weist die Sensoreinrichtung wenigstens eine Strahlungseinrichtung zur Positionierung der Sensoreinrichtung auf, welche Licht in wenigstens zwei und bevorzugt in wenigstens drei bezüglich der Sensoreinrichtung festgelegte unterschiedliche Richtungen ausgibt. Durch diese in unterschiedliche Richtungen ausgegebenen Strahlungen lässt sich diese Sensoreinrichtung in Bezug auf Ihre Umgebung genau positionieren. Vorzugsweise sind auch mehrere Strahlungseinrichtungen in Form von Laserpointern vorgesehen, welche das Licht in wenigstens zwei zueinander unterschiedliche Richtungen ausgeben.

Vorzugsweise weist wenigstens eine Strahlungseinrichtung eine Laserlichtquelle auf, die, wie oben gesagt, besonders vorteilhaft geeignet zu Positionierung ist.

Die vorliegende Erfindung ist weiterhin auf ein Verfahren zum Betreiben einer Anlage zur Umwandlung von Sonnenlicht in eine andere Energieform gerichtet wobei mit einer Vielzahl von Spiegelelementen auf diese eintreffendes Sonnenlicht auf die Wandlereinrichtung gerichtet wird und diese Wandlereinrichtung das Sonnenlicht wenigstens teilweise in eine andere Energieform umwandelt. Dabei sind die einzelnen speziellen Elemente jeweils schwenkbar angeordnet.

Erfindungsgemäß ist wenigstens einem Spiegelelement eine Sensoreinrichtung zugeordnet welche ein für eine auf sie eingestrahlte Sonneneinstrahlung charakteristisches Signal ausgibt, wobei diese Sensoreinrichtung mit Hilfe einer von der Sensoreinrichtung ausgehenden Strahlung gegenüber der Anlage positioniert wird. Vorzugsweise wird die Sensoreinrichtung mit Hilfe mehrerer in unterschiedlicher Richtung sich erstreckender Strahlengänge gegenüber der Anlage positioniert.

Weitere vorteilhafte Ausführungsformen ergeben sich aus den beigefügten Zeichnungen.

### Darin zeigen:

- Fig. 1: eine Darstellung eines erfindungsgemäßen Solarkraftwerks; und
- Fig. 2: eine perspektivische Darstellung zur Veranschaulichung der Anordnung einer erfindungsgemäßen Sensoreinrichtung.

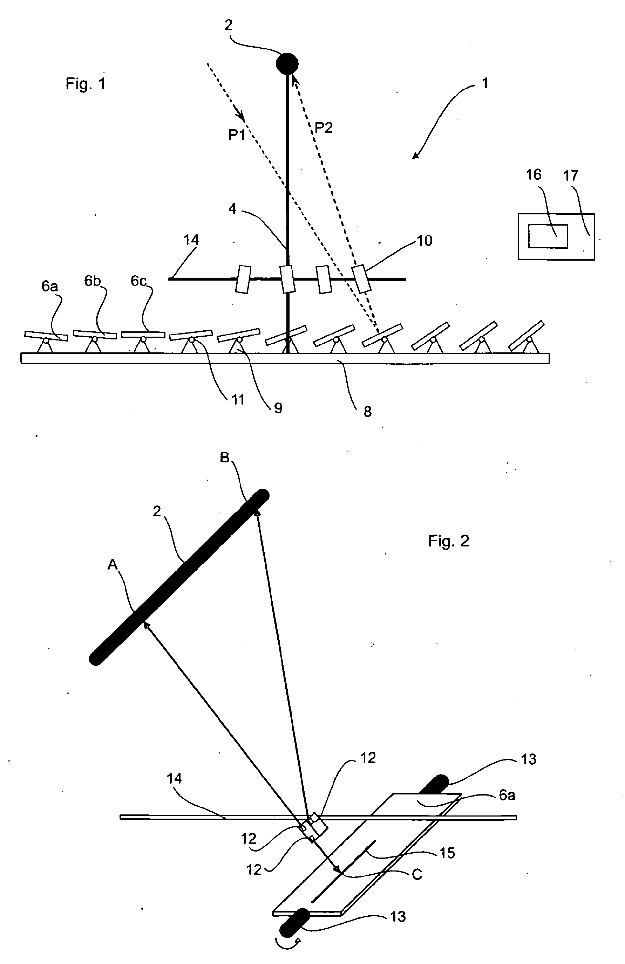

Fig. 1 zeigt eine erfindungsgemäße Anlage 1 zur Umwandlung von Sonnenlicht in eine andere Energieform. Diese Anlage 1 weist eine Wandlereinrichtung 2 auf, die beabstandet zu einer Vielzahl von Spiegelelementen 6a, 6b, 6c angeordnet ist. Dabei wird diese Wandlereinrichtung über einen Träger 4 beabstandet gegenüber den einzelnen Spiegelelementen 6a, 6b, 6c gehalten.

Die Spiegelelemente 6a, 6b, 6c dienen dazu, um eingestrahltes Sonnenlicht (vgl. Pfeil P1) in Richtung der Wandlereinrichtung 2 zu reflektieren (Pfeil P2). Bei der Wandlereinrichtung 2 handelt es sich hier um ein Absorberrohr, welches sich in einer senkrecht zur Figurenebene stehenden Richtung erstreckt. Auch die einzelnen Spiegelelemente 6a, 6b, 6c erstrecken sich senkrecht zu der Figurenebene und können dabei beispielsweise Längen im Bereich von 100 m und Breiten im Bereich von 10 bis 30 cm aufweisen.

Die einzelnen Spiegelelemente 6a, 6b, 6c sind auf einer Tragplatte 8 beidseitig bezüglich der Wandlereinrichtung 2 angeordnet. Der Träger 4 ist dabei über ein Fixlager an dieser Tragplatte 8 fest angeordnet.

Wie aus Fig. 1 ersichtlich, ist die Schwenkstellung der einzelnen Spiegelelemente 6a, 6b, 6c je nach der Position der Schwenkspiegel gegenüber der Wandlereinrichtung 2 unterschiedlich und hängt von dem Winkel ab, unter dem das Sonnenlicht eingestrahlt wird. Die einzelnen Spiegelelemente 6a, 6b, 6c sind bezüglich Schwenkachsen 11 in der Figurenebene um einen vorgegebenen Winkel schwenkbar. Das Bezugszeichen 12 bezieht sich auf eine Antriebseinrichtung für die Spiegelelemente 6a, 6b, 6c.

Das Bezugszeichen 10 bezieht sich auf eine Sensoreinrichtung wobei hier jedem Spiegelelement 6a, 6b, 6c eine derartige Sensoreinrichtung zugeordnet ist. Diese Sensoreinrichtung 10 ist beabstandet zu der Wandelereinrichtung 2 angeordnet. Genauer gesagt sind vorteilhaft diese Sensoreinrichtungen 10 näher an den Spiegelelementen 6a, 6b, 6c als an der Wandlereinrichtung 2 vorgesehen. Bevorzugt handelt es sich hier um einen Lichtsensor. An Hand der bei der Referenzierung an dieser Sensoreinrichtung 10 gemessenen Lichtintensität und Verteilung können Rückschlüsse gezogen werden auf die korrekte Orientierung des jeweils zugeordneten Spiegelelements 6a, 6b, 6c wie auch auf einen Zustand des Spiegelelements 6a, 6b, 6c wie beispielsweise eine Verschmutzung, wobei dies insbesondere auch im Vergleich zu den anderen Spiegelelementen folgen kann. Die einzelnen Sensoreinrichtungen 10 sind an einen gemeinsamen Träger 14 angeordnet.

Bei der in Fig. 1 gezeigten Ausführungsform können auch mehrere Sensoreinrichtungen 10 über die Länge der Wandlereinrichtung 2 verteilt sein um auf diese Weise eine Torsion der Spiegelelemente erkennen und ausmitteln zu können. Auf diese Weise wird schließlich eine optimale Fokussierung der Spiegelelemente 6a, 6b, 6c garantiert, ohne das hierzu der Betrieb unterbrochen wird. Durch ein separates Nachführen und Einrichten jedes Spiegelelements 6a, 6b, 6c im Betrieb der Anlage kann erreicht werden, dass die übrigen Spiegel oder Spiegelgruppen auf die Wandlereinrichtung ausgerichtet bleiben. Es wäre jedoch auch möglich, mehrere Spiegelelemente simultan einzurichten. Das Bezugszeichen 17 bezieht sich auf eine Steuereinrichtung. Diese Steuereinrichtung stellt die Verbindung zwischen den Sensoreinrichtungen 10 und den Spiegelelementen 6a, 6b, 6c genauer den Antriebselementen 9 der Spiegelelemente her. Auf diese Weise kann in einem geschlossenen Regelkreis ein einzelnes Spiegelelement exakt fokussiert werden. In einer Speichereinrichtung 16 sind Referenzwerte für die Stellungen der Spiegelelemente 6a, 6b, 6c abgelegt.

Fig. 2 zeigt eine perspektivische Darstellung zur Veranschaulichung der Anordnung der einzelnen Sensoreinrichtungen 10. Auch hier ist ein Spiegelelement 6a dargestellt, welches um die Achse 11 schwenkbar ist. Zwischen diesem Spiegelelement und der Wandlereinrichtung 2, die hier als Absorberrohr ausgeführt ist, ist die Sensoreinrichtung 10 vorgesehen. Dabei ist die Sensoreinrichtung 10 bevorzugt in derjenigen Ebene angeordnet, welche einerseits durch die Längsrichtung des Absorberrohrs 2 und andererseits durch die Mittelachse M des Spiegelelements 6a aufgespannt wird.

Die Sensoreinrichtung 10 weist hier drei (nicht im Detail gezeigte) Strahlungseinrichtungen 12 auf, welche Laserbündel entlang der Richtung La, Lb und Lc aussenden. Zur exakten Justierung der Sensoreinrichtungen werden die betreffenden Laserpunkte auf das Absorberrohr (Punkte A, B) sowie auf das Spiegelelement (Punkt C) eingerichtet. Genauer gesagt fallen bei genauer Justierung die Laserpunkte bevorzugt genau mittig auf das Absorberrohr. Sobald dies geschehen ist, ist die Sensoreinrichtung korrekt in der oben erwähnten Ebene angeordnet. Das Bezugszeichen 15 bezieht sich auf eine Markierungslinie, die bevorzugt in der Mitte des Spiegelelements 6a angeordnet ist. Auf diese Markierungslinie kann die von der Strahlungseinrichtung entlang als Pfeil Lc angegebene Strahlung abgebildet werden. Das Bezugszeichen 13 kennzeichnet Aufhängungen zum Aufhängen des Spiegelelements 6a.

Bei einem (hier nicht dargestellten) Turmkraftwerk ist die Sensoreinrichtung genau auf einer Verbindungslinie zwischen dem Zentrum der (dann vorzugsweise punkt- oder kugelförmigen) Wandlereinrichtung und dem Zentrum des Spiegelelements zu positionieren. In diesem Fall kann eine Sensoreinrichtung mit zwei Laserpointern verwendet werden, wobei hier ein Laserpunkt auf das Zentrum der Wandlereinrichtung und der andere auf das Zentrum des Spiegelelements ausgerichtet wird. Das Spiegelelement kann hier anstelle der oben genannten Markierungslinie einen Markierungspunkt oder einen Markierungskreis aufweisen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Anlage
- 2: Wandlereinrichtung
- 4: Träger für Wandlereinrichtung
- 6a, 6b, 6c: Spiegelelemente
- 8: Tragplatte
- 9: Antriebseinrichtung
- 10: Sensoreinrichtung
- 11: Schwenkachse
- 12: Strahlungseinrichtung
- 13: Aufhängung
- 14: Träger
- 15: Markierungslinie
- 16: Speichereinrichtung
- 17: Steuereinrichtung
- P1: . Pfeil 1
- P2: Pfeil 2
- M: Mittelachse
- La, Lb, Lc: Richtungen
- A, B, C: Punkte

## Patentansprüche

1. Anlage zur Umwandlung von Sonnenlicht in eine andere Energieform mit einer Wandlereinrichtung (2), welche auf sie eintreffende Strahlung absorbiert, einer Vielzahl von Spiegelelementen (6a, 6b, 6c), welche beabstandet zu der Wandlereinrichtung (2) angeordnet sind, um in einem Arbeitszustand auf sie eingestrahltes Sonnenlicht auf die Wandlereinrichtung (2) umzulenken, wobei die einzelnen Spiegelelemente (6a, 6b, 6c) jeweils um wenigstens eine Achse wenigstens teilweise unabhängig voneinander schwenkbar sind und die Anlage wenigstens eine Sensoreinrichtung (10) aufweist, welche ein für eine auf sie eingestrahlte Sonneneinstrahlung charakteristisches Signal ausgibt und die Sensoreinrichtung auf Licht reagiert, das von den Spiegelelementen (6a. 6b, 6c) in Richtung der Sensoreinrichtung (10) reflektiert wird,
**dadurch gekennzeichnet, dass**
die Sensoreinrichtung (10) wenigstens eine Strahlungseinrichtung (12) aufweist, mit deren Hilfe sie gegenüber der Anlage (1) positioniert werden kann.

2. Anlage nach Anspruch 1,
**dadurch gekennzeichnet, dass**
die Strahlungseinrichtung (12) eine Laserlichtquelle (14) aufweist.

3. Anlage nach Anspruch 2,
**dadurch gekennzeichnet, dass**
die Laserlichtquelle (14) Licht in einem sichtbaren Wellenlängenbereich abgibt.

4. Anlage nach wenigstens einem der vorangegangenen Ansprüche,
**dadurch gekennzeichnet, dass**
die Sensoreinrichtung (10) wenigstens zwei und bevorzugt wenigstens drei Strahlungseinrichtungen aufweist, welche Licht in unterschiedliche Richtungen aussenden.

5. Anlage nach wenigstens einem der vorangegangenen Ansprüche,
**dadurch gekennzeichnet, dass**
die Sensoreinrichtung ein einer Ebene angeordnet ist, welche durch eine Längsrichtung eines Spiegelelements und durch eine Längsrichtung der Wandlereinrichtung gebildet ist.

6. Anlage nach wenigstens einem der vorangegangenen Ansprüche,
**dadurch gekennzeichnet, dass**
die Anlage eine Vielzahl von Sensoreinrichtungen (10) aufweist.

7. Anlage nach wenigstens einem der vorangegangenen Ansprüche,
**dadurch gekennzeichnet, dass**
jedem Spiegelelement (6a, 6b, 6c) eine Sensoreinrichtung zugeordnet ist

8. Anlage nach wenigstens einem der vorangegangenen Ansprüche,
**dadurch gekennzeichnet, dass**
die Anlage eine Trägereinrichtung aufweist, an der die Sensoreinrichtungen (10) angeordnet werden, und die die Fixierung der Sensoren in der optimalen Position ermöglicht.

9. Anlage nach wenigstens einem der vorangegangenen Ansprüche,
**dadurch gekennzeichnet, dass**
wenigstens ein Spiegelelement (6a, 6b, 6c) ein Markierungselement aufweist, auf dem die von der Strahlungseinrichtung der Sensoreinrichtung (10) abgegebene Strahlung sichtbar ist.

10. Anlage nach wenigstens einem der vorangegangenen Ansprüche,
**dadurch gekennzeichnet, dass**
die Sensoreinrichtung (10) eine Prozessoreinrichtung (18) aufweist, welche Intensitätsverläufe des auf sie eintreffenden Lichts auswertet.

11. Sensoreinrichtung für eine Anlage (1) zur Umwandlung von Sonnenlicht in eine andere Energieform, welche ein für eine auf sie eingestrahlte Sonneneinstrahlung charakteristisches Signal ausgibt,
**dadurch gekennzeichnet, dass**
die Sensoreinrichtung wenigstens eine Strahlungseinrichtung zur Positionierung der Sensoreinrichtung (10) aufweist, welche Licht in wenigstens zwei bezüglich der Sensoreinrichtung festgelegte unterschiedliche Richtungen ausgibt.

12. Sensoreinrichtung nach Anspruch 11,
**dadurch gekennzeichnet, dass**
wenigstens eine Strahlungseinrichtung eine Laserlichtquelle (14) aufweist.

13. Verfahren zum Betreiben einer Anlage zur Umwandlung von Sonnenlicht in eine andere Energieform, wobei mit einer Vielzahl von Spiegelelementen (6a, 6b, 6c) auf diese eintreffendes Sonnenlicht auf eine Wandlereinrichtung (2) gerichtet wird und diese Wandlereinrichtung (2) das Sonnenlicht wenigstens teilweise in eine andere Energieform umwandelt, wobei die einzelnen Spiegelelemente (6a, 6b, 6c) jeweils schwenkbar angeordnet sind,
**dadurch gekennzeichnet, dass**
wenigstens einem Spiegelelement (6a, 6b, 6c) eine Sensoreinrichtung (10) zugeordnet wird, welche ein für eine auf sie eingestrahlte Sonneneinstrahlung charakteristisches Signal ausgibt, wobei diese Sensoreinrichtung mit Hilfe einer von der Sensoreinrichtung (10) ausgehenden Strahlung gegenüber der Anlage positioniert wird.
